# EUROPÄISCHE PATENTSCHRIFT

(11) **EP 1 131 774 B1**
(45) Veröffentlichungstag und Bekanntmachung des Hinweises auf die Patenterteilung: **11.09.2002**
(21) Anmeldenummer: 99964484.2
(22) Anmeldetag: 12.11.1999
(51) Int. Cl.: G06K 7/10

(54) **VORRICHTUNG ZUM LESEN EINES BARCODES**
BAR-CODE READING DEVICE
DISPOSITIF POUR LIRE UN CODE A BARRES

(30) Priorität: 13.11.1998 DE 19852464
(43) Veröffentlichungstag der Anmeldung: 12.09.2001
(73) Patentinhaber: Wincor Nixdorf GmbH & Co KG, 33106 Paderborn (DE)
(72) Erfinder: IHLEFELD, Joachim, D-01097 Dresden (DE); WOLLMANN, Christian, D-01465 Liegau-Augustusbad (DE)
(74) Vertreter: Schaumburg, Thoenes & Thurn
(86) Internationale Anmeldenummer: EP9908709
(87) Internationale Veröffentlichungsnummer: WO00030019

(56) Entgegenhaltungen:
- US-A- 5 641 958
- US-A- 5 814 803

## Beschreibung

Die Erfindung betrifft eine Vorrichtung zum Lesen eines Barcodes mit einem Objektiv, einem zeilen- oder matrixförmigen Fotoempfänger und einer Aperturblende, die im Strahlengang zwischen dem Fotoempfänger und einer Eintrittsöffnung der Vorrichtung für das von dem Barcode ausgehende Licht angeordnet ist. Ein solcher Barcodeleser ist beispielsweise aus der US-A-5,291,008 bekannt.

Es ist allgemein bekannt, Barcodeleser mit anisotroper Auflösung zu realisieren. Dazu werden im allgemeinen als Fotoempfänger CCD- oder CMOS-Zeilensensoren mit rechteckig geformten Bildpunkten eingesetzt. Ferner ist es bekannt, die Aperturblende annähernd parallel zum abzutastenden Barcode anzuordnen. Durch diese Maßnahme werden der Schärfentiefebereich in der gewünschten Leserichtung und die Empfindlichkeit des Detektors verbessert.

Der Nachteil solcher Lösungen besteht darin, daß das analoge Ausgangssignal des Zeilensensors für Barcodestrukturen mit einer niedrigen Ortsfrequenz, eine höhere Amplitude als für Barcodestrukturen mit einer höheren Ortsfrequenz erreicht. Deshalb entstehen in der nachfolgenden Binarisierung des Ausgangssignals in digitale Signale für die schwarzen bzw. weißen Streifen, insbesondere jedoch zwischen unterschiedlichen Ortsfrequenzen Digitalisierungsfehler, die die Lesequalität des Barcodelesers beeinträchtigen. Die Folge sind unter anderem ein eingeschränkter Schärfentiefebereich und eine geringe Störfestigkeit, die die Handhabung des Barcodelesers als sogenannten "Touchreader" begrenzen.

Aus der US-A-5,641,958 ist eine Vorrichtung zum Lesen eines Barcodes bekannt, bei der der Barcode durch einen scharf gebündelten Lichtstrahl über einen beweglichen Spiegel abgetastet wird. Dabei ist im Strahlengang zwischen der Lichtquelle und dem beweglichen Spiegel eine Aperturblende angeordnet, die beiderseits eines zentralen lichtdurchlässigen streifenförmigen Abschnittes und symmetrisch zu diesem jeweils zwei Zonen hat, deren Transmissionsvermögen gesteuert werden kann. Durch symmetrische Ansteuerung dieser Zonen kann die Apertur und damit der Strahlenquerschnitt verändert werden, um auf diese Weise unterschiedliche Schärfentiefebereiche einzustellen.

Der Erfindung liegt die Aufgabe zugrunde, bei einer Barcodelesevorrichtung der eingangs genannten Art den Schärfentiefebereich bei gleichzeitiger hoher Lichtempfindlichkeit zu erweitern.

Diese Aufgabe wird erfindungsgemäß dadurch gelöst, daß die Aperturblende mehrere zueinander parallele streifenförmige Bereiche unterschiedlicher Lichtdurchlässigkeit oder unterschiedlichen Reflexionsvermögens hat, wobei mehrere Bereiche hoher Lichtdurchlässigkeit und mehrere Bereiche niedriger Lichtdurchlässigkeit alternierend angeordnet sind.

Durch die erfindungsgemäß strukturierte Blende wird eine im Arbeitsbereich flache Modulationsübertragungsfunktion des Objektivs erreicht, die optimale Bedingungen für die nachfolgende Binarisierung des Ausgangssignals des Sensors liefert und insbesondere die oben angesprochenen Unterschiede zwischen den Signalen bei niedriger Ortsfrequenz und den Signalen bei hoher Ortsfrequenz verringert.

Die alternierend aufeinanderfolgenden Bereiche der Aperturblende können beispielsweise lichtundurchlässig und transparent sein oder ein hohes Reflexionsvermögen bzw. ein geringes Reflexionsvermögen haben. Anstelle der streifenförmigen Bereiche mit geringem Reflexionsvermögen können auch transparente Bereiche vorgesehen sein.

Vorzugsweise sind die streifenförmigen Bereiche der Aperturblende mindestens annähernd symmetrisch bezüglich der optischen Achse des Objektivs angeordnet.

Bei einem durch die Aperturblende hindurchtretenden Strahlengang kann die Aperturblende zwischen zwei Linsen oder Linsengruppen des Objektivs angeordnet werden. Wird der Strahlengang dagegen gefaltet, kann die Aperturblende auch auf einem im Strahlengang angeordneten Spiegel ausgebildet sein. Dies ermöglicht eine besonders raumsparende Lösung, bei der beispielsweise eine Eintrittsöffnung für den einfallenden Strahl und der Fotoempfänger auf einer Seite des Objektivs und der Spiegel auf der anderen Seite des Objektivs angeordnet sind. Bei einer ähnlichen Ausführungsform kann die Aperturblende auch auf der dem Fotoempfänger abgewandten konvexen Grenzfläche des Objektivs angeordnet sein.

Bei einer weiteren Ausführungsform der Erfindung wird vorgeschlagen, daß die Aperturblende auf einer Fläche eines im Strahlengang angeordneten Filters ausgebildet ist.

Weitere Vorteile und Merkmale der Erfindung ergeben sich aus der folgenden Beschreibung, welche in Verbindung mit den beigefügten Zeichnungen die Erfindung an Hand von Ausführungsbeispielen erläutert. Es zeigen:
- Figur 1: eine schematische Darstellung des optischen Systems einer ersten Ausführungsform des erfindungsgemäßen Barcodelesers,
- Figur 2: eine Darstellung eines zu lesenden Barcodes in der Objektebene y des optischen Systems gemäß Figur 1,
- Figur 3: eine schematische Darstellung des die Aperturblende in der Blendenebene der Figur 1 bildenden Streifenmusters,
- Figur 4: eine grafische Darstellung der Modulationsübertragungsfunktion über der Ortsfrequenz,
- Figur 5: eine grafische Darstellung des am Fotoempfänger auftretenden Analogsignals über der Zeit mit und ohne Aperturblende,
- Figur 6: eine grafische Darstellung der digitalisierten Form des in Figur 5 dargestellten Signals,
- Figur 7: eine schematische Darstellung des optischen Systems eines Barcodelesers gemäß einer zweiten Ausführungsform der Erfindung,
- Figur 8: einen schematischen Schnitt durch einen Barcodeleser gemäß einer dritten Ausführungsform der Erfindung,
- Figur 9: eine vergrößerte schematische Darstellung eines in dem Barcodeleser gemäß Figur 8 verwendeten Filters, und
- Figur 10: eine schematische Darstellung der Detektor- und Auswerteschaltung für den erfindungsgemäßen Barcodeleser.

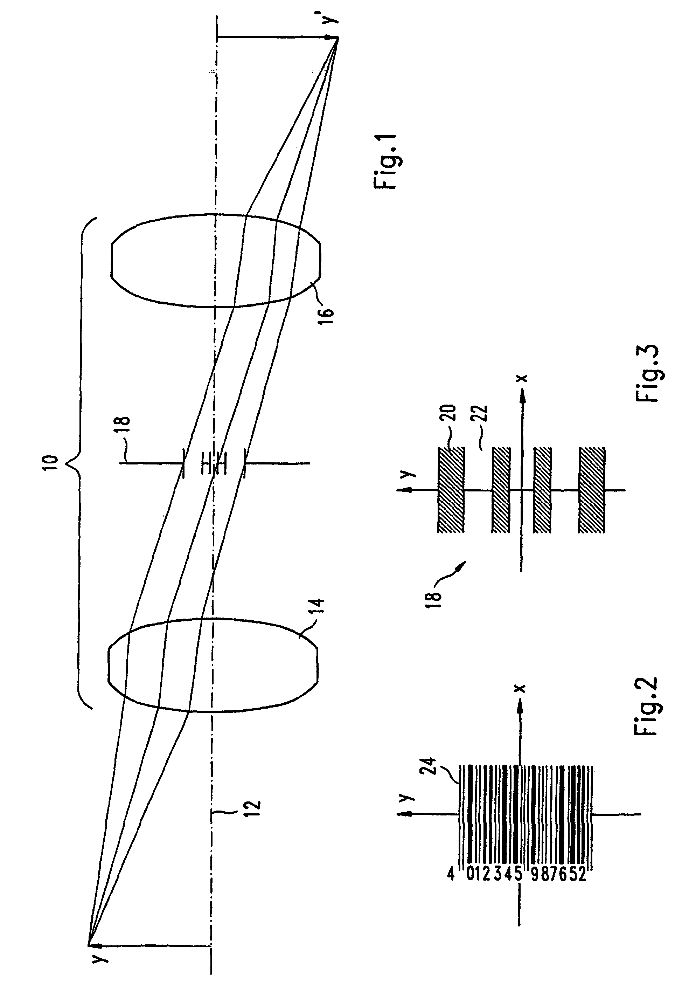

Das in der Figur 1 dargestellte optische System umfaßt ein allgemein mit 10 bezeichnetes Objektiv mit einer optischen Achse 12 und zwei Linsen oder Linsengruppen 14 und 16. Zwischen den beiden Linsen 14 und 16 ist eine Aperturblende 18 angeordnet. Diese umfaßt gemäß Figur 3 mehrere streifenförmige Felder unterschiedlicher Lichtdurchlässigkeit, d.h. lichtundurchlässige Streifen 20 und lichtdurchlässige Streifen 22.

In der durch den Pfeil y angegebenen Objektebene senkrecht zur optischen Achse 12 befindet sich ein zu lesender Barcode 24, dessen der Leserichtung entsprechende Achse y mit dem Pfeil y in Figur 1 zusammenfällt. Auf der der Objektebene abgewandten Seite des Objektivs 10 ist in der durch den Pfeil y' gekennzeichneten Ebene ein in Figur 1 nicht dargestellter Fotoempfänger angeordnet. Die Beleuchtung des Barcodes erfolgt z.B. mit einem flächigen oder zeilenförmigen Strahler und mit kohärentem oder inkohärentem Licht.

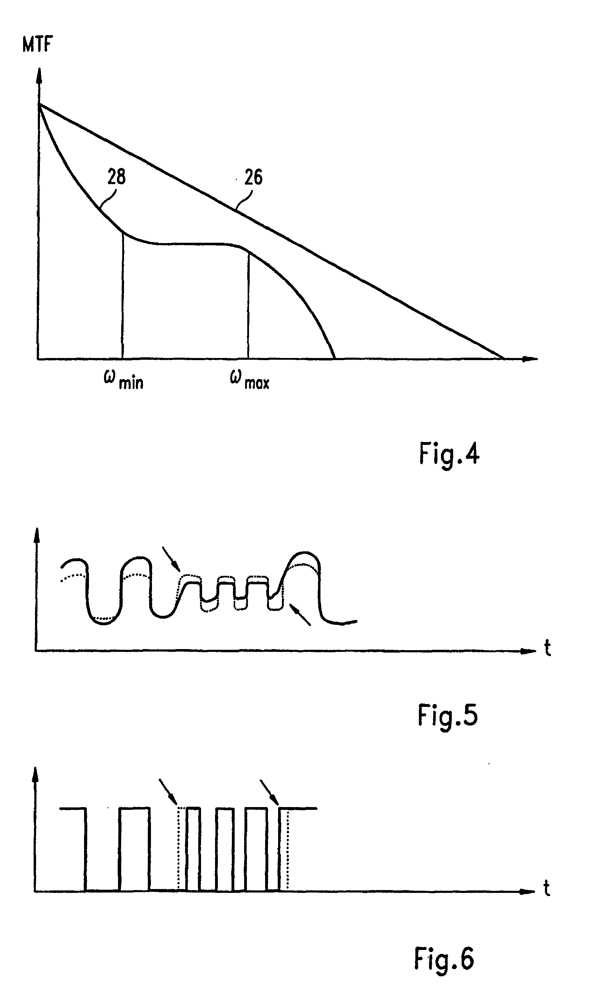

Die erfindungsgemäß strukturierte Aperturblende 18 bewirkt eine Veränderung der Modulationsübertragungsfunktion im interessierenden Bereich der Ortsfrequenzen. Die Modulationsübertragungsfunktion ist in Figur 4 dargestellt. Dabei gibt die gerade Linie 26 die Modulationsübertragungsfunktion für eine einfache herkömmliche Aperturblende wieder, während die Kurve 28 die Modulationsübertragungsfunktion für die erfindungsgemäß strukturierte Blende zeigt. Das Maximum der auftretenden Ortsfrequenzen wird aus der Größe der sogenannten Module ermittelt, die der kleinsten Strichbreite des Barcodes entsprechen. Das Minimum der auftretenden Ortsfrequenz wird aus der Periode der größten Strichbreiten des abzutastenden Barcodes ermittelt. Man erkennt in Figur 4, daß die Modulationsübertragungsfunktion für eine herkömmliche Blende zwischen den Frequenzwerten ωₘᵢₙ und ωₘₐₓ sehr unterschiedliche Werte hat, während für die erfindungsgemäß strukturierte Blende die Kurve der Modulationsübertragungsfunktion im Bereich zwischen ωₘᵢₙ und ωₘₐₓ einen nahezu horizontalen Abschnitt hat.

Figur 5 zeigt das Ausgangssignal des Fotoempfängers, wobei die ausgezogene Linie das Signal für eine herkömmliche Aperturblende und die punktierte Linie das Signal für eine erfindungsgemäß strukturierte Aperturblende wiedergeben. Der Fotoempfänger ist gewöhnlich eine CCD-Zeile oder ein CMOS-Zeilensensor. Im Diagramm der Figur 5 ist zu erkennen, daß im unkorrigierten Signal (durchgezogene Linie) einer CCD-Zeile Signalverfälschungen beim Übergang zwischen hohen und niedrigen Ortsfrequenzen bestehen, die nach der Korrektur (punktierte Linie) durch eine strukturierte Aperturblende geringer werden, so daß die Binarisierung und damit die Leserate verbessert wird, wie man dies in Figur 6 erkennen kann. Auch hier bezeichnen die ausgezogenen Linien das unkorrigierte Signal, während die punktierten Linien das korrigierte Signal wiedergeben. Man erkennt aus den Figuren 5 und 6, daß mit der erfindungsgemäßen Aperturblende der Barcodeleser insgesamt unempfindlicher gegenüber Störungen wird. Diese Eigenschaft kann unter anderem benutzt werden, die Lichtempfindlichkeit und/oder den Schärfentiefebereich zu steigern.

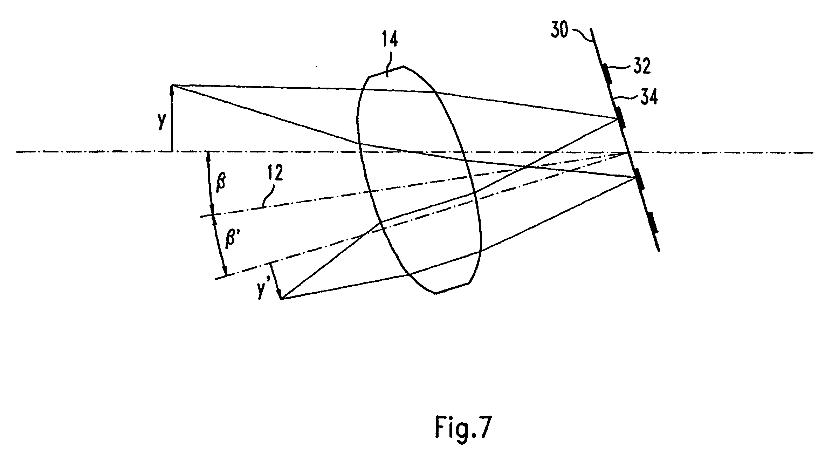

Figur 7 zeigt das optische System einer abgewandelten Ausführungsform der Erfindung. Dabei besteht das Objektiv 10 aus einer einzelnen Linse 14, deren optische Achse 12 unter einem Winkel β gegenüber der Senkrechten auf die Objektebene geneigt ist. Der Fotoempfänger liegt an der durch den Pfeil y' wiedergegebenen Stelle und somit auf derselben Seite der Linse 14 wie die durch den Pfeil y wiedergegebene Objektebene. Auf der anderen Seite der Linse 14 ist ein Spiegel 30 angeordnet, der wie die in Figur 3 abgebildete Aperturblende 18 strukturiert ist und somit abwechselnd reflektierende Streifen 32 und transparente Streifen 34 hat. Die Wirkung dieses Spiegels ist die gleiche wie die Wirkung der Aperturblende 18 auf den durch das Objektiv 10 in Figur 1 fallenden Lichtstrahl.

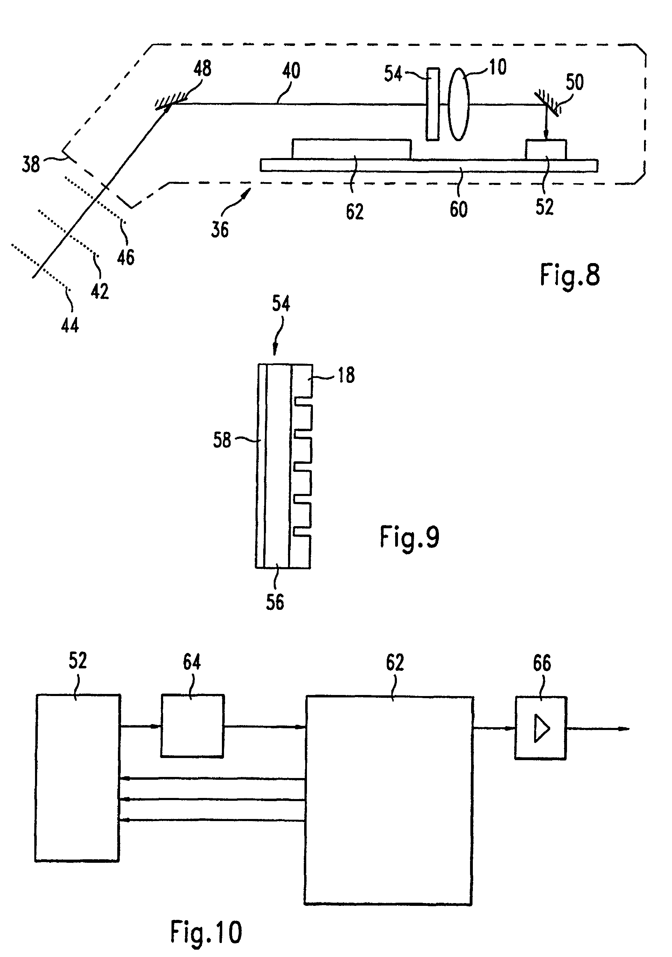

Figur 8 zeigt in schematischer Weise eine praktische Ausführungsform des erfindungsgemäßen Barcodelesers mit einem Gehäuse 36, das eine Eintrittsöffnung 38 für die einfallenden Strahlen 40 hat. Die punktierte Linie 42 bezeichnet die Objektebene, während die punktierten Linien 44 und 46 den Schärfentiefebereich angeben, innerhalb dessen der Barcode noch gelesen werden kann. In dem Gehäuse 36 wird der einfallende Strahl über einen ersten Planspiegel 48 in Richtung auf ein Objektiv 10 und hinter diesem durch einen Planspiegel 50 auf einen CCD-Sensor 52 gelenkt. In Einfallsrichtung vor dem Objektiv 10 ist ein Filter 54 angeordnet, das in Figur 9 genauer schematisch dargestellt ist. Es umfaßt ein IR-Sperrfilter 56, das auf seiner Lichteintrittsseite mit einer dichroitischen Schicht 58 bedampft ist und auf seiner Lichtaustrittsseite die strukturierte Aperturblende 18 trägt.

Der CCD-Sensor 52 ist auf einer Platine 60 angeordnet, die auch einen Prozessor 62 trägt.

Die wesentlichen Elemente auf der Platine 60 sind in Figur 10 dargestellt. Das vom CCD-Sensor 52 erzeugte Analogsignal wird in einem Analog/Digital-Wandler 64 digitalisiert und dem Mikroprozessor 62 zugeführt. Der CCD-Zeilensensor verfügt über einen internen Takttreiber. Die zeitliche Steuerung kann mit einfachen Mitteln direkt durch den Prozessor 62 erfolgen. Der Analog/Digital-Wandler wird mit dem CCD-Zeilensensor synchronisiert. Die Daten werden seriell in den Prozessor übertragen.

Die von dem Prozessor ermittelten Ergebnisse können über eine Schnittstelle 66 an entsprechende Peripheriegeräte, d.h. Anzeigegeräte ausgegeben werden.

## Patentansprüche

1. Vorrichtung zum Lesen eines Barcodes mit einem Objektiv (10), einem zeilenoder matrixförmigen Fotoempfänger (52) und einer Aperturblende (18), die im Strahlengang zwischen dem Fotoempfänger (52) und einer Eintrittsöffnung der Vorrichtung für das von dem Barcode ausgehende Licht angeordnet ist, **dadurch gekennzeichnet, daß** die Aperturblende (18) mehrere zueinander parallele streifenförmige Bereiche (20, 22; 32, 34) unterschiedlicher Lichtdurchlässigkeit oder unterschiedlichen Reflexionsvermögens hat, wobei mehrere Bereiche hoher Lichtdurchlässigkeit und mehrere Bereiche niedriger Lichtdurchlässigkeit alternierend angeordnet sind.

2. Vorrichtung nach Anspruch 1, **dadurch gekennzeichnet, daß** die alternierend aufeinanderfolgenden Bereiche (20, 22) opak bzw. transparent sind.

3. Vorrichtung nach Anspruch 1 oder 2, **dadurch gekennzeichnet, daß** die streifenförmigen Bereiche (20, 22; 32, 34) mindestens annähernd symmetrisch bezüglich der optischen Achse (12) des Objektivs (10) angeordnet sind.

4. Vorrichtung nach einem der Ansprüche 1 bis 3, **dadurch gekennzeichnet, daß** die Aperturblende (18) zwischen zwei Linsen oder Linsengruppen (14, 16) des Objektivs (10) angeordnet ist.

5. Vorrichtung nach einem der Ansprüche 1 bis 3, **dadurch gekennzeichnet, daß** die Aperturblende (32, 34) auf einem im Strahlengang angeordneten Spiegel (30) ausgebildet ist.

6. Vorrichtung nach Anspruch 5, **dadurch gekennzeichnet, daß** eine Eintrittsöffnung für den einfallenden Strahl und der Fotoempfänger auf einer Seite des Objektivs (10) und der Spiegel (30) auf der anderen Seite des Objektivs (10) angeordnet sind.

7. Vorrichtung nach Anspruch 6, **dadurch gekennzeichnet, daß** die Aperturblende auf der dem Fotoempfänger abgewandten konvexen Grenzfläche des Objektivs (10) angeordnet ist.

8. Vorrichtung nach einem der Ansprüche 1 bis 4, **dadurch gekennzeichnet, daß** die Aperturblende (18) auf einer Fläche eines im Strahlengang angeordneten Filters (54) angeordnet ist.

## Claims

1. Device for reading a barcode, having an objective (10), a linear or matrical photodetector (52) and an aperture diaphragm (18), which is arranged in the beam path between the photodetector (52) and an input opening of the device for the light coming from the barcode, **characterized in that** the aperture diaphragm (18) has a plurality of mutually parallel strip-like regions (20, 22; 32, 34) with different optical transmissivity or different reflecting power, wherein a plurality of regions with high optical transmissivity and a plurality of regions with low optical transmissivity are arranged in an alternating fashion.

2. Device according to Claim 1, **characterized in that** the alternately successive regions (20, 22) are respectively opaque and transparent.

3. Device according to Claim 1 or 2, **characterized in that** the strip-like regions (20, 22; 32, 34) are arranged at least approximately symmetrically with respect to the optical axis (12) of the objective (10).

4. Device according to one of Claims 1 to 3, **characterized in that** the aperture diaphragm (18) is arranged between two lenses or lens groups (14, 16) of the objective (10).

5. Device according to one of Claims 1 to 3, **characterized in that** the aperture diaphragm (32, 34) is formed on a mirror (30) arranged in the beam path.

6. Device according to Claim 5, **characterized in that** an input opening for the incident beam and the photodetector are arranged on one side of the objective (10), and the mirror (30) is arranged on the other side of the objective (10).

7. Device according to Claim 6, **characterized in that** the aperture diaphragm is arranged on the convex bounding surface of the objective (10) facing away from the photodetector.

8. Device according to one of Claims 1 to 4, **characterized in that** the aperture diaphragm (18) is arranged on a surface of a filter (54) arranged in the beam path.

## Revendications

1. Dispositif de lecture d'un code à barres comprenant un objectif (10), un photorécepteur (52) en forme de lignes ou en forme de matrice et un diaphragme (18) d'ouverture qui est disposé dans le trajet des rayons entre le photorécepteur (52) et un orifice d'entrée du dispositif pour la lumière provenant du code à barres, **caractérisé en ce que** le diaphragme (18) d'ouverture a plusieurs parties (20,22,32,34) en forme de bandes parallèles entre elles, de transparence à la lumière différente ou de pouvoir de réflexion différent, plusieurs parties de grande transparence à la lumière et plusieurs parties de transparence à la lumière plus petites étant disposées en alternance.

2. Dispositif suivant la revendication 1, **caractérisée en ce que** les parties (20,22) qui se succèdent en alternance sont opaques et respectivement transparentes.

3. Dispositif suivant la revendication 1 ou 2, **caractérisé en ce que** les parties (20,22,32,34) en forme de bandes sont disposées au moins à peu près symétriquement par rapport à l'axe (12) optique de l'objectif (10).

4. Dispositif suivant l'une des revendications 1 à 3, **caractérisé en ce que** le diaphragme (18) d'ouverture est interposé entre deux lentilles ou entre deux groupes (14,16) de lentilles de l'objectif (10).

5. Dispositif suivant l'une des revendications 1 à 3, **caractérisé en ce que** le diaphragme (32,34) d'ouverture est formé sur un miroir (30) disposé dans le trajet des rayons.

6. Dispositif suivant la revendication 5, **caractérisé en ce qu'**une ouverture d'entrée pour le rayonnement incident et le photorécepteur sont disposés d'un côté de l'objectif (10) et le miroir (30) de l'autre côté de l'objectif (10).

7. Dispositif suivant le revendication 6, **caractérisé en ce que** le diaphragme d'ouverture est disposé sur la surface de délimitation convexe de l'objectif (10), qui est éloignée du photorécepteur.

8. Dispositif suivant l'une des revendications 1 à 4, **caractérisé en ce que** le diaphragme (18) d'ouverture est disposé sur une surface d'un filtre (54) disposé dans le trajet des rayons.
